# FASCICULE DE BREVET EUROPEEN

(11) **EP 1 547 072 B1**
(45) Date de publication et mention de la délivrance du brevet: **25.03.2009**
(21) Numéro de dépôt: 03778382.6
(22) Date de dépôt: 01.10.2003
(51) Int. Cl.: G11B 9/00

(54) **DISPOSITIF D'ENREGISTREMENT DE DONNEES COMPORTANT UN SUPPORT DE MEMOIRE EN FORME DE MEMBRANE**
DATENAUFZEICHNUNGSVORRICHTUNG MIT EINEM MEMBRANFÖRMIGEN SPEICHERTRÄGER
DATA RECORDING DEVICE COMPRISING A DIAPHRAGM-TYPE SUPPORT

(30) Priorité: 03.10.2002 FR 0212275; 01.07.2003 FR 0307965
(43) Date de publication de la demande: 29.06.2005
(73) Titulaire: COMMISSARIAT A L'ENERGIE ATOMIQUE, 75752 Paris Cédex 15 (FR)
(72) Inventeur: GIDON, Serge, F-38140 La Murette (FR)
(74) Mandataire: Jouvray, Marie-Andrée
(86) Numéro de dépôt international: PCT/FR2003/002879
(87) Numéro de publication internationale: WO 2004/032132

(56) Documents cités:
- WO-A-00/36608
- WO-A-89/08489
- DE-A- 1 449 904
- FR-A- 1 519 660
- US-A- 3 502 455
- US-A- 3 646 533
- US-A- 5 216 631
- US-A- 5 581 537
- US-A1- 2002 094 435

## Description

### Domaine technique de l'invention

L'invention concerne un dispositif d'enregistrement de données comportant un réseau bidimensionnel de micro-pointes, dont l'apex est généralement de dimensions nanométriques, disposé dans un plan face à un support de mémoire, et des moyens électroniques d'adressage et de contrôle des micro-pointes de manière à permettre l'enregistrement de données sur le support de mémoire.

### État de la technique

L'enregistrement de données, aussi bien dans le domaine de l'informatique que dans le domaine des multimédias, doit répondre à un besoin croissant de capacité. Différentes techniques ont été développées, allant du disque dur magnétique au DVD utilisant l'optique et des matériaux à changement de phase. Quelle que soit la technique d'enregistrement utilisée, on cherche toujours à réduire la taille des points mémoires (bits) et l'accroissement de la capacité d'enregistrement passe par une augmentation de la densité de stockage.

Récemment, de très grandes capacités de stockage, de l'ordre du Térabit/cm², ont été obtenues en mettant en oeuvre des micro-pointes du type utilisées dans le domaine de la microscopie à effet de pointe (« The Millipede - More than one thousands tips for future AFM data storage », P. Vettiger et al., IBM J. RES. Develop., vol.44, n° 3, mai 2000, p.323-340 et « Fabrication of microprobe array with sub-100nm nano-heater for nanometric thermal imaging and data storage », Dong-Weon Lee et al., Technical Digest, MEMS 2001, 14th IEEE International Conference on Micro Electro Mechanical Systems (Cat. N°01CH37090), IEEE, Piscataway, NJ, USA, 2001, p.204-207). La haute densité est obtenue par localisation des bits au moyen de micro-pointes dont l'apex est de dimension nanométrique. Les micro-pointes sont, de préférence, disposées en réseau, avec un accès parallèle aux données, ce qui permet d'atteindre d'excellentes performances en ce qui concerne le débit. Un actionneur unique, qui peut être électromécanique, permet un déplacement relatif monolithique de l'ensemble du réseau de micro-pointes par rapport à la surface du média constituant le support de mémoire.

Dans un tel dispositif d'enregistrement de données, avec effet de pointes, il est nécessaire de garantir un parfait contact de toutes les pointes avec le support de mémoire. Pour des raisons de complexité du système, il n'est pas envisageable de contrôler la position de chaque micro-pointe individuellement. Or, les micro-pointes sont fabriquées de manière collective, par des techniques dérivées de celles de la microélectronique, et il reste toujours une dispersion, due à la fabrication, de la hauteur des micro-pointes. Bien que cette dispersion soit minime, typiquement de l'ordre de 100nm, la plus longue des micro-pointes d'un réseau appuie plus que les autres sur le support de mémoire.

Pour surmonter cette difficulté, chaque micro-pointe est portée en porte-à-faux par une extrémité d'un cantilever, de manière analogue aux réseaux de micro-pointes utilisés en microscopie à sonde locale. La souplesse du cantilever permet alors d'absorber la contrainte d'un appui.

Cependant, les forces d'appui des micro-pointes sur le support de mémoire ne doivent pas excéder une valeur de l'ordre de 100nN, de manière à ne pas endommager le support de mémoire. En effet, la surface de contact d'une micro-pointe avec le support de mémoire étant minuscule, la pression est importante. Les cantilevers doivent donc être très souples pour absorber la dispersion de hauteur des micro-pointes. À titre d'exemple, des cantilevers ayant une raideur de l'ordre de 1 N/m, 100µm de longueur, quelques dizaines de µm de largeur et quelques µm d'épaisseur, ont été développés. Il est difficile d'envisager des cantilevers plus souples. En effet, leurs dimensions sont difficiles à maîtriser en raison de leur grande longueur vis-à-vis de leur faible largeur et/ou épaisseur. De plus, la précision de positionnement des pointes en regard de la surface du support de mémoire s'en ressentirait, limitant ainsi la densité de la mémoire.

### Objet de l'invention

L'invention a pour but un dispositif d'enregistrement de données ne présentant pas les inconvénients ci-dessus et permettant plus particulièrement d'ignorer la dispersion dans la hauteur des micro-pointes.

Selon l'invention, ce but est atteint par le fait que le support de mémoire comprend une membrane souple portée par un cadre formant une pluralité d'alvéoles, au moins une micro-pointe étant associée à chaque alvéole. Ce cadre permet d'assurer une rigidité à la membrane tout en lui assurant une liberté de déplacement à l'intérieur de chaque alvéole.

Selon un développement de l'invention, deux réseau de micro-pointes sont disposés de part et d'autre du support de mémoire.

Les deux réseaux de micro-pointes sont, de préférence, décalés latéralement, de manière à ce que les micro-pointes associées à une même alvéole du cadre ne soient pas disposées exactement en vis-à-vis.

Selon un mode de réalisation préférentiel, la membrane souple comporte au moins une première couche, faisant fonction de mémoire, et une seconde couche, destinée à assurer une certaine rigidité.

Selon un autre développement de l'invention, la membrane souple comporte des première et seconde membranes élémentaires, séparées par un réseau d'éléments d'espacement, décalé latéralement par rapport au cadre. Ceci permet d'éliminer les effets de bord indésirables.

Dans une autre variante de réalisation, permettant également de limiter les effets de bord, le dispositif comporte un réseau de lames souples, séparées de la membrane par un réseau bidimensionnel de plots d'espacement et subdivisant chaque alvéole en une pluralité d'alvéoles élémentaires, associées chacune à au moins une micro-pointe.

Le dispositif comporte, de préférence, des moyens de déplacement relatif du support de mémoire et du réseau de micro-pointes, parallèlement et, éventuellement perpendiculairement audit plan.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 illustre, en coupe, un élément de base d'un dispositif selon l'invention.
La figure 2 représente, en perspective, un mode particulier de réalisation d'un cadre de support d'une membrane d'un élément de base selon la figure 1.
La figure 3 représente, en coupe, deux alvéoles adjacentes d'un dispositif selon l'invention
Les figures 4 et 5 représentent, en vue de face, deux variantes de réalisation d'un dispositif selon l'invention.
La figure 6 représente, en coupe, un dispositif à double réseau de micro-pointes.
Les figures 7 et 8 représentent, en coupe, deux étapes successives de fabrication du cadre et d'une partie de la membrane d'un dispositif selon l'invention.
La figure 9 illustre, en coupe, une variante de la figure 1.
La figure 10 représente un autre mode particulier de réalisation d'un dispositif selon l'invention.
Les figures 11 et 12, illustrent les positions respectives de différents éléments de deux variantes de réalisation du dispositif selon la figure 10.
La figure 13 représente un autre mode particulier de réalisation d'un dispositif selon l'invention.
La figure 14 illustre les positions respectives de différents éléments d'une variante de réalisation du dispositif selon la figure 13.
Les figures 15 à 18 représentent les étapes successives d'un procédé de réalisation d'un dispositif selon les figures 13 et 14.

### Description de modes particuliers de réalisation.

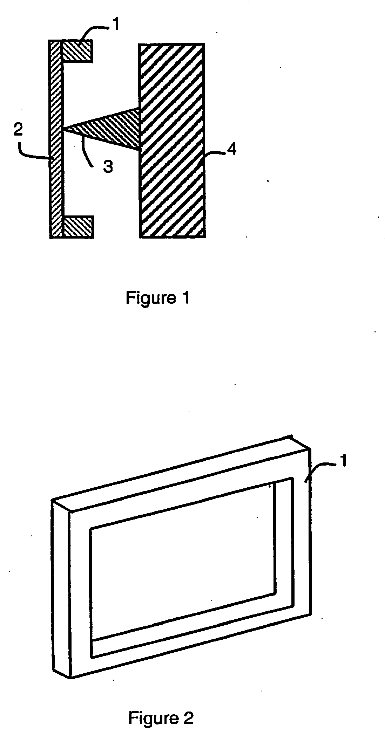

Comme représenté à la figure 1, un élément de base du dispositif d'enregistrement de données comporte un cadre 1 portant, sur une de ses faces, une membrane souple 2 constituant le support de mémoire. Chaque élément de base constitue une alvéole, associée à une micro-pointe 3 formée sur une base 4 disposée face au support de mémoire, parallèlement à celui-ci.

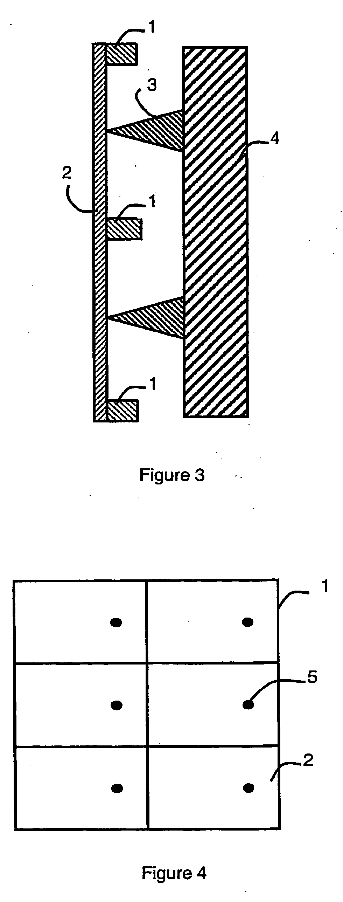

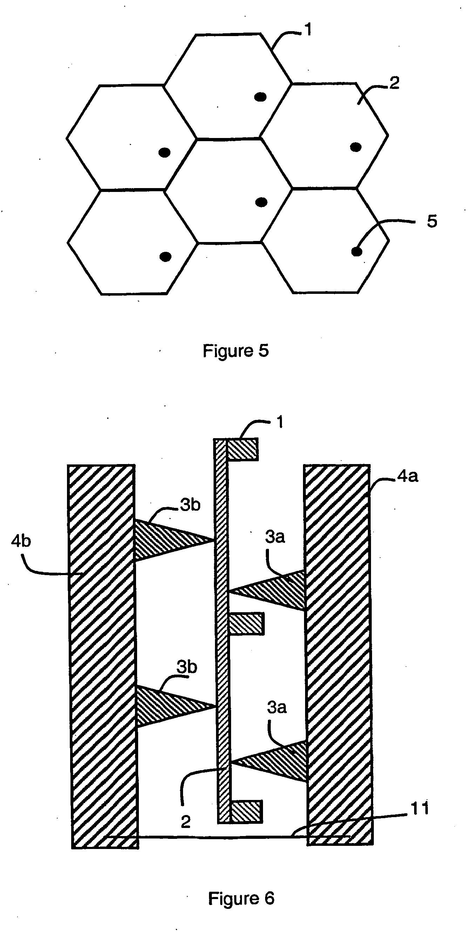

Un dispositif d'enregistrement de données comporte une pluralité d'alvéoles adjacentes, associées à un réseau bidimensionnel de micro-pointes 3 (figures 3 à 5). Les figures 4 et 5 illustrent deux configurations particulières pouvant être utilisées, avec des alvéoles respectivement de forme rectangulaire (figures 2 et 4) et de forme hexagonale (figure 5).

En position de repos, les micro-pointes 3 peuvent soit être en contact avec la membrane souple 2, soit être écartées de celle-ci. Dans ce dernier cas, en position de lecture ou d'écriture, le support de mémoire est déplacé perpendiculairement à la base 4 de manière à amener les micro-pointes 3 en contact avec le support de mémoire constitué par la membrane souple 2. Le déplacement relatif du support de mémoire et des micro-pointes perpendiculairement à leur plan est, de préférence, réalisé par déplacement du cadre 1 de support de la membrane, la base 4, sur laquelle sont formées les micro-pointes 3, restant fixe.

Un déplacement relatif des micro-pointes 3 et du support de mémoire, parallèlement au plan de la membrane souple, avec ou sans contact avec celle-ci, peut également être imprimé à la membrane et/ou aux micro-pointes par des actionneurs (non représentés), eux-mêmes commandés par micro-ordinateur.

Le contrôle et l'adressage ou multiplexage des micro-pointes 3 en position de lecture ou d'écriture est réalisé par tout moyen approprié, de préférence par un circuit électronique réalisé en technologie intégrée dans la base 4. Les micro-pointes 3, fixes, peuvent alors être réalisées par des techniques de microélectronique sur silicium. Toute la surface de la base 4, située vis-à-vis du support de mémoire, est en effet disponible pour le circuit électronique d'adressage et de contrôle des micro-pointes, qui n'a pas à être déporté à l'extrémité de la mémoire comme dans nombre de dispositifs antérieurs. Ceci permet d'optimiser la surface de silicium utilisée. Dans le cas d'une mémoire électrique, un courant doit passer des micro-pointes vers la membrane électriquement conductrice, celle-ci étant alors reliée par une liaison électrique (non représentée) au circuit électronique disposé dans la base 4.

La membrane souple 2 est constituée par une couche d'extrêmement faible épaisseur, de l'ordre de quelques nanomètres à quelques micromètres, qui peut être conductrice. Elle se déforme donc sous l'action d'une force locale perpendiculaire à sa surface. À titre d'exemple, on peut montrer que, sous l'action d'une force centrée de 100nN, une couche de carbone quasi-diamant de 10nm d'épaisseur, tendue sur un cadre de dimensions (côté, diamètre, etc.) de l'ordre de 100µm, se déforme avec une flèche de l'ordre de 12µm, ce qui correspond à une raideur équivalente de seulement 8,3nN/µm, soit plus de deux ordres de grandeur inférieure à celle de cantilevers classiques. Il est facile d'ajuster cette constante de raideur en choisissant une couche d'épaisseur plus ou moins importante, la raideur étant proportionnelle au cube de l'épaisseur de la membrane.

Cette faible valeur de la constante de raideur permet une dispersion importante de hauteur des micro-pointes 3, sans aboutir à des forces d'appui importantes. Dans l'exemple ci-dessus, une variation de hauteur de la micro-pointe de 100nm ne représente qu'une variation de la force d'appui de 0,83nN, soit moins d'1 % d'un appui nominal de 100nN. Toutes les dispersions de la hauteur des micro-pointes dues aux technologies de fabrication sont alors sans influence en regard de l'amplitude d'une déformation moyenne imposée de la membrane, soit 12µm dans l'exemple ci-dessus.

Sur les figures 4 et 5, les points d'appui sur la membrane souple 2 des micro-pointes 3 associées à chaque alvéole du cadre 1 sont représentés en 5. Ces points d'impact ne sont pas disposés au centre de chacune des alvéoles mais décentrés, le cadre et la membrane se déplaçant par rapport au réseau de micro-pointes, parallèlement au plan de la membrane, au cours de la lecture et/ou de l'écriture.

La planéité du cadre 1 doit être compatible avec la tolérance sur la force d'appui des micro-pointes 3, c'est-à-dire analogue à la tolérance sur la dispersion de hauteur des micro-pointes, qui peut être relativement importante, comme indiqué ci-dessus. Pour les mêmes raisons, il n'est pas nécessaire d'avoir une planéité exceptionnelle du support de mémoire.

La membrane 2 a une faible raideur dans la dimension normale à son plan, mais elle présente une forte raideur pour des déformations tangentielles ou latérales, contrairement aux structures à cantilevers qui souffrent d'une flexibilité latérale importante, pouvant limiter la densité de la mémoire, même si elles sont optimisées avec des formes triangulaires. Cette bonne rigidité géométrique permet un positionnement précis de l'extrémité des micro-pointes vis-à-vis de la surface de la membrane.

Contrairement aux mémoires utilisant un réseau de cantilevers, la taille de la mémoire peut éventuellement être importante, c'est-à-dire supérieure à 1cm², pour offrir une plus grande capacité d'enregistrement de données.

Grâce à la souplesse de la membrane 2, un actionneur (non représenté), qui déplace le cadre 1 portant la membrane 2 constituant le support de mémoire, n'a pas à garantir, dans la dimension perpendiculaire au plan de la membrane, une précision aussi exigeante que dans les dispositifs utilisant un réseau de cantilevers. Une précision de l'ordre de quelques micromètres est suffisante, tandis qu'une précision de l'ordre du nanomètre est nécessaire dans l'art antérieur. Cette tolérance simplifie énormément la conception de l'actionneur.

Le dispositif présente également une bonne tolérance en ce qui concerne la rugosité de la membrane 2, la souplesse inhérente de celle-ci permettant d'absorber les rugosités, volontaires ou non, de la membrane, par exemple constituées par des pistes ou des plots (« patterning ») de celle-ci.

Le dispositif selon l'invention peut avoir une densité élevée de micro-pointes 3. Ainsi, dans l'art antérieur, les réseaux de pointes envisagés comportent 100x100 éléments, au pas de 100µm, la taille des cantilevers et la présence des pistes d'adressage des pointes fixant le pas minimum. Dans le dispositif selon l'invention, les alvéoles peuvent être beaucoup plus petites (10µm, par exemple) en raison de l'absence de cantilever et de la disposition du circuit d'adressage vis-à-vis du support de mémoire. Il est ainsi possible d'obtenir des mémoires à fort parallélisme pour en réduire le temps d'accès.

Dans le mode particulier de réalisation représenté à la figure 6, la capacité de la mémoire est doublée grâce à l'utilisation du support de mémoire en double face.

Le dispositif comporte alors deux réseaux de micro-pointes (3a, 3b), disposés de part et d'autre du support de mémoire 2. Les deux réseaux de micro-pointes 3a et 3b sont, de préférence, décalés latéralement, de manière à ce que les micro-pointes 3a et 3b associées à une même alvéole du cadre ne soient pas disposées exactement en vis-à-vis.

Sur la figure 6, les micro-pointes 3a d'un premier réseau de micro-pointes sont en contact avec une face de la membrane 2, permettant la lecture ou l'écriture, sous le contrôle du circuit électronique correspondant intégré dans la base 4a, tandis que les micro-pointes 3b du second réseau de micro-pointes, en contact avec la face opposée de la membrane 2, permettent la lecture ou l'écriture sous le contrôle du circuit électronique correspondant intégré dans la base 4b. Le cadre 1 ou les deux réseaux de micro-pointes, de préférence rendus solidaires par une liaison 11 reliant les bases 4a et 4b, peuvent être déplacés dans des plans parallèles au plan de la membrane pendant les opérations d'écriture ou de lecture, sous le contrôle des circuits électroniques correspondant intégrés dans les bases 4a et 4b.

Dans une variante de réalisation, les micro-pointes 3a du premier réseau de micro-pointes sont en contact avec la membrane 2, permettant la lecture ou l'écriture, sous le contrôle du circuit électronique correspondant intégré dans la base 4a, tandis que les micro-pointes 3b du second réseau de micro-pointes sont légèrement écartées de la membrane. Un déplacement du cadre 1 de support de la membrane, perpendiculairement au plan de celle-ci, en direction du second réseau de micro-pointes 3b, provoque l'écartement des micro-pointes 3a du premier réseau, tandis que les micro-pointes 3b du second réseau viennent en contact avec la membrane, permettant l'écriture ou la lecture, sous le contrôle du circuit électronique correspondant intégré dans la base 4b. L'écartement entre les bases 4a et 4b peut être choisi de manière à ce qu'aucune micro-pointe ne vienne en contact avec la membrane dans une position centrale, de repos. Le déplacement du cadre peut être remplacé par un déplacement simultané des deux réseaux de micro-pointes, de préférence solidarisées par leurs bases 4a et 4b (liaison 11).

Dans une autre variante de réalisation, les bases 4a et 4b des deux réseaux de micro-pointes ne sont pas solidaires. Elles peuvent être déplacées simultanément et en sens opposé vis-à-vis du support de mémoire. Dans une première position, de repos, les deux bases 4a et 4b sont écartées du plan du cadre 1, et aucune micro-pointe n'est en contact avec la membrane 2. Dans une seconde position, de lecture ou d'écriture, les deux bases 4a et 4b sont déplacées en direction du support de mémoire et toutes les micro-pointes 3a et 3b viennent en contact avec la membrane, de part et d'autre de celle-ci. La lecture et l'écriture de chacune des faces du support de mémoire sont alors, comme sur la figure 6, contrôlées par les circuits électroniques respectivement intégrés dans les bases 4a et 4b.

Le circuit électronique de contrôle et d'adressage situé dans la base 4 peut être réalisé à l'aide de toute technologie sur silicium, les micro-pointes 3 étant ensuite réalisées par une technologie de microélectronique sur. Les micro-pointes peuvent, par exemple, être réalisées à partir de silicium, éventuellement recouvert d'un matériau conducteur et/ou dur, par exemple du nitrure de titane (TiN), du carbure de tungstène (W₂C) ou du carbone-diamant amorphe (quasi-diamant, éventuellement dopé pour être conducteur), comme décrit dans l'article « Procédés de fabrication de micropointes en silicium », D. Moreau et al., Le Vide, n° 282, Oct-dec.96, p.463-477, ISSN 1266-0167 ou dans l'article « Novel probes for scanning probe microscopy », E. Oesterschulze, Applied Physics A 66, 1998, S3-S9.

Pour garantir l'absence d'usure des micro-pointes, il est également envisageable de les réaliser en diamant massif suivant le procédé décrit dans l'article « Fabrication of monolithic probes for scanning probe microscopy aplications », C. Mihalcea et al., Applied Physics A 66, 1998, S87-S90.

Le support de mémoire est constitué par un empilement de couches constituant la membrane souple 2. L'empilement de couches comporte principalement deux couches, une première couche faisant fonction de mémoire et une seconde couche, dite couche mécanique, destinée à assurer une certaine rigidité à la membrane souple. La première couche, faisant fonction de mémoire, est dans un matériau dépendant des techniques d'enregistrement envisagées, par exemple en matériau thermoplastique, en matériau à changement de phase, en matériau magnétique, etc. D'autres couches peuvent éventuellement assurer des fonctions thermiques ou électriques, certaines couches pouvant contribuer simultanément à plusieurs fonctions.

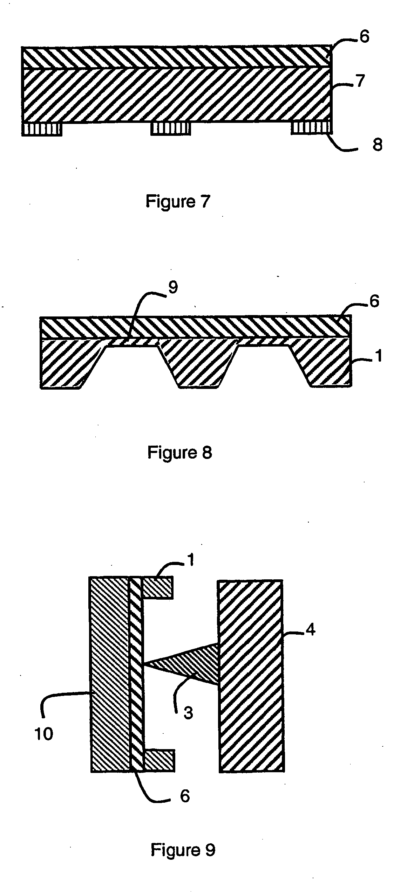

Les figures 7 et 8 illustrent deux étapes successives de fabrication d'un cadre en silicium 1 et de la couche mécanique de la membrane portée par le cadre 1. Dans une première étape (figure 7), la couche mécanique 6 est déposée sur une couche 7 de silicium d'une épaisseur de 100 à 500µm, orientée (100). La couche mécanique 6 est, par exemple, constituée par un revêtement de carbone amorphe ou de carbone quasi-diamant (« DLC : diamond-like carbon »), déposé sur la couche de silicium 7 par tout procédé connu, par exemple par dépôt chimique en phase vapeur (CVD) ou par dépôt physique en phase vapeur (PVD). Les motifs des alvéoles sont ensuite réalisés par photo-insolation de résine sur la face de la couche de silicium 7 opposée à la couche mécanique 6, de manière à former un masque 8 de résine.

La couche 7 de silicium est ensuite gravée chimiquement, par exemple par attaque d'hydroxyde de potassium (KOH) au travers du masque de résine 8. La gravure, réalisée suivant des plans cristallins préférentiels (111), est sélective et s'arrête sur la couche mécanique 6 de la membrane. La partie restante de la couche de silicium constitue ainsi le cadre 1 dans lequel sont formées les alvéoles, dont le fond est constitué par la couche mécanique 6 de la membrane, ainsi portée par le cadre.

Dans le mode de réalisation particulier illustré à la figure 8, une couche résiduelle de silicium est conservée, en contact avec la couche mécanique 6 de la membrane. Cette couche résiduelle de silicium 9 permet d'augmenter la rigidité de la membrane ou d'assurer un contact mécanique spécifique.

Les autres couches de la membrane, couche faisant fonction de mémoire et couches d'encapsulation complémentaires peuvent ensuite être réalisées sur la couche mécanique 6. Ces couches pourraient éventuellement être réalisées avant la gravure de la couche de silicium 7. Dans ce cas, il est néanmoins nécessaire de les protéger de l'attaque chimique, par exemple au moyen d'une enceinte fixée de manière étanche sur la couche de silicium 7.

Dans la variante représentée à la figure 9, les première et secondes couches de la membrane (couche 10 faisant fonction de mémoire et couche mécanique 6) sont représentées, la micro-pointe 3 venant en contact avec la couche mécanique 6. Ceci peut permettre, dans certains cas, de disposer d'une force d'appui significative entre la micro-pointe et le support de mémoire, sans toutefois exercer de contrainte sur la couche 10 faisant fonction de mémoire. Une telle force d'appui peut, notamment, s'avérer intéressante dans le cas d'un enregistrement électrique sur un matériau à changement de phase. L'épaisseur de la couche mécanique 6 permet de déterminer la force applicable sans solliciter la couche 10 faisant fonction de mémoire, déposée sur la face de la couche mécanique opposée à la face de la membrane en contact avec les micro-pointes 3.

Le dispositif selon l'invention permet ainsi de choisir entre une force d'appui faible et une force d'appui plus élevée, en fonction des techniques d'enregistrement utilisées, ce qui n'est pas possible avec un dispositif utilisant des cantilevers.

Dans le dispositif d'enregistrement décrit ci-dessus, il peut se produire un effet de bord lorsqu'une micro-pointe 3 vient en appui sur la membrane souple 2 à proximité du cadre 1. En effet, dans chaque alvéole, la souplesse du support de mémoire diminue du centre vers le bord de la membrane souple. Il est possible de limiter cet effet en limitant la surface scannée à une fraction de la surface de la membrane de chaque alvéole. Une telle limitation n'est cependant pas optimale en termes d'utilisation du support de mémoire.

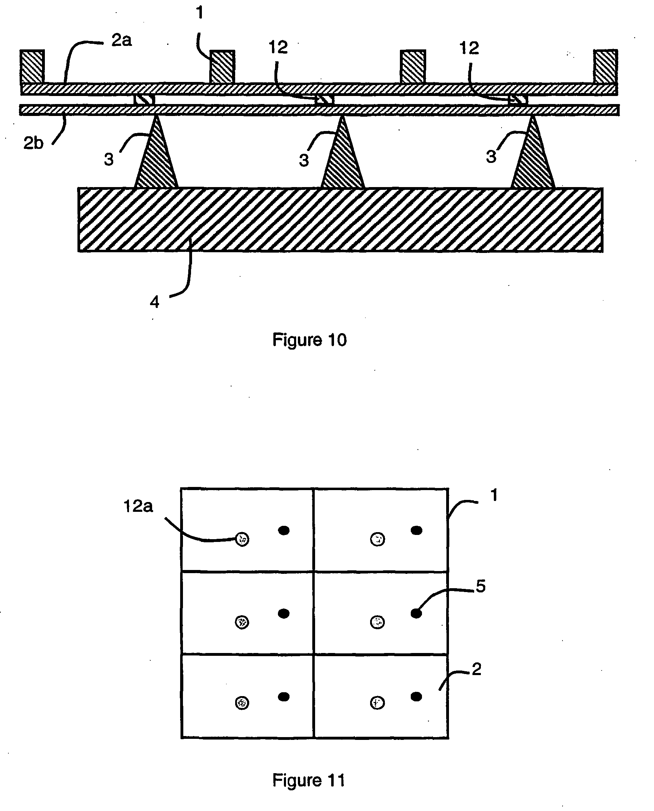

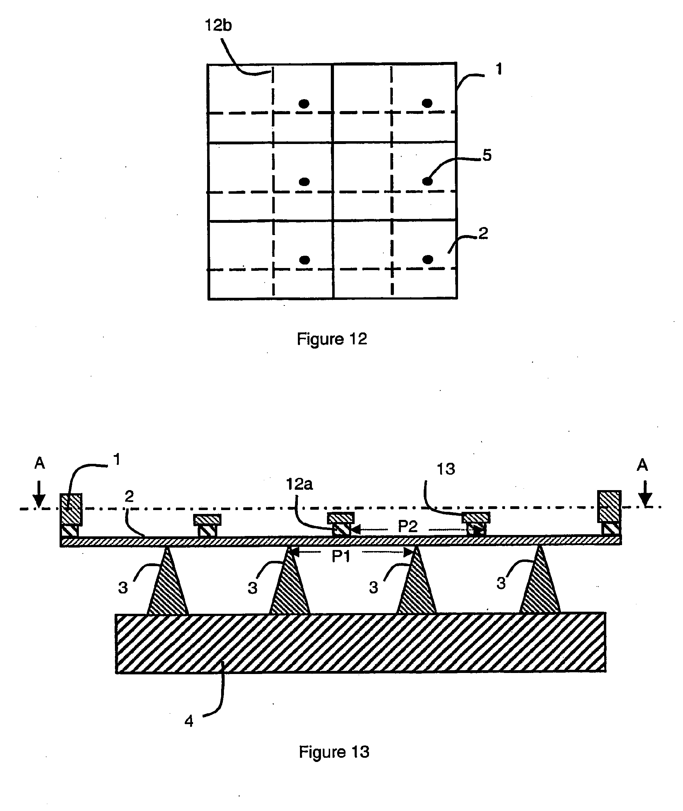

Le mode de réalisation particulier représenté à la figure 10 permet de résoudre ce problème d'effet de bord. Dans ce dispositif, la membrane souple comporte une première membrane élémentaire 2a, associée au cadre 1 comme sur la figure 1, et une seconde membrane élémentaire 2b. Les deux membranes élémentaires 2a et 2b sont séparées par un réseau d'éléments d'espacement 12, qui est décalé latéralement par rapport au cadre 1. Le réseau d'éléments d'espacement peut être constitué par une pluralité de plots d'espacement individuels 12a (figure 11) ou constituer un cadre intermédiaire 12b (figure 12). Les éléments d'espacement 12 ont une épaisseur suffisante pour éviter le contact entre les deux membranes élémentaires lors de leur déformation.

Ainsi, lorsqu'une micro-pointe 3 se rapproche du cadre délimitant le bord d'une alvéole, seule la seconde membrane élémentaire 2b se déforme et la force d'appui reste faible. Lorsque la micro-pointe 3 vient en appui contre la seconde membrane élémentaire 2b au niveau d'un élément d'espacement 12, la déformation est transmise à la première membrane élémentaire 2a en un emplacement situé à l'écart du cadre 1 et, en conséquence, présentant une souplesse suffisante. Dans tous les cas, au moins une des membranes élémentaires assure la souplesse recherchée et compense toute dispersion éventuelle de hauteur des micro-pointes. Ainsi, il est possible d'écarter tout effet de bord par l'utilisation d'une membrane double à cadres imbriqués, formée par l'addition de la seconde membrane élémentaire 2b, qui est reliée à la première membrane élémentaire 2a, par les éléments d'espacement 12, uniquement en des emplacements décalés latéralement par rapport au cadre.

Cette membrane double (2a, 12, 2b) peut être réalisée à partir d'un empilement comportant une alternance de couches de silicium, destinées à former le cadre 1 et les éléments d'espacement 12, et de couches fines en matériau, du type décrit ci-dessus, destiné à constituer les membranes élémentaires 2a et 2b. Un tel empilement peut être obtenu par découpes et adhérences successives de tranches de silicium par tout procédé connu, notamment par un procédé de type Smart Cut®. Le silicium peut être retiré par attaque chimique par un procédé comparable à celui décrit en référence aux figures 7 et 8 pour la fabrication d'une membrane simple. Pour cela, des ouvertures sont pratiquées, par photo-masquage, dans la première membrane 2a afin de permettre une attaque isotrope, par voie chimique, de la couche de silicium destinée à former les éléments d'espacement 12. La première membrane 2a est alors partiellement ajourée.

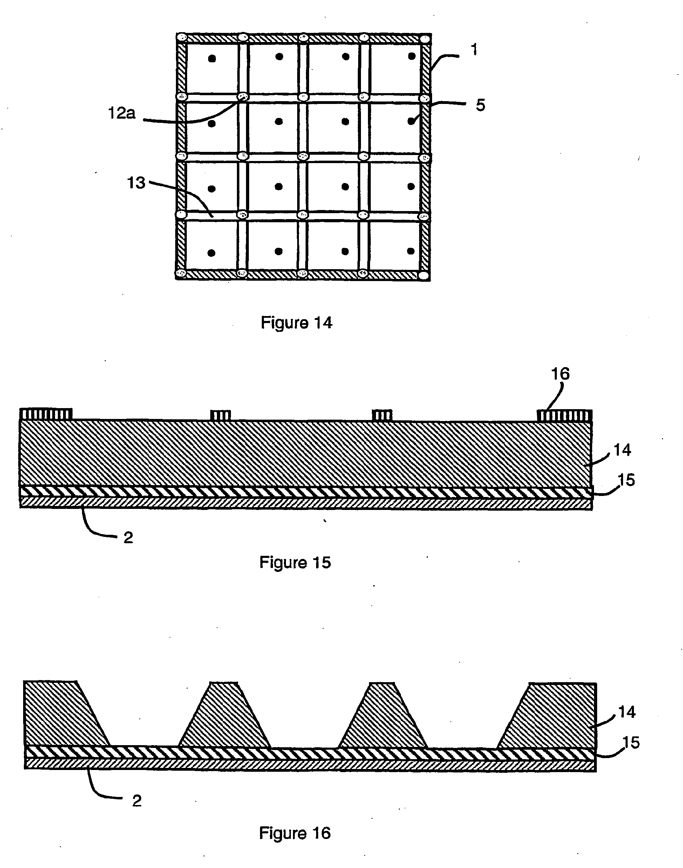

Un autre mode particulier de réalisation, illustré aux figures 13 et 14, permet de réduire l'effet de bord provoqué lorsqu'une micro-pointe 3 vient en appui sur la membrane souple 2 à proximité du cadre 1. Un réseau de lames 13, minces et souples, séparées de la membrane 2 par un réseau bidimensionnel de plots d'espacement 12a subdivise chaque alvéole en une pluralité d'alvéoles élémentaires, associées chacune à au moins une micro-pointe. Chaque alvéole peut alors avoir des dimensions largement supérieures au pas P1 du réseau de micro-pointes (typiquement moins de 100µm) et atteindre par exemple 1 cm de côté. Sur les figures 13 et 14, une alvéole sensiblement carrée, délimitée par le cadre 1, est subdivisée en 16 alvéoles élémentaires par deux séries entrecroisées, perpendiculaires, de 3 lames 13 parallèles. En pratique, le nombre de micro-pointes du réseau étant de l'ordre de la dizaine de milliers, le nombre d'alvéoles élémentaires subdivisant une alvéole peut, par exemple, être de l'ordre de la centaine (10x10). L'épaisseur des lames 13 est très inférieure à l'épaisseur du cadre 1 (de 100µm à 500µm), de manière à assurer une grande souplesse du support de mémoire à l'intérieur de chaque alvéole de grande dimension. L'effet de bord mentionné précédemment ne peut donc plus intervenir qu'à proximité du cadre 1, c'est-à-dire pour un nombre très limité de micro-pointes 3.

La souplesse des lames 13 est fonction du cube de leur épaisseur et proportionnelle à leur largeur. Elle dépend également de leur longueur entre deux points fixes, c'est-à-dire de leur longueur entre deux plots d'espacement 12a. Cette dernière dimension est fonction du pas P1 du réseau de micro-pointes. Pour améliorer la souplesse des lames 13, il est possible d'associer plusieurs micro-pointes à chaque alvéole élémentaire. La souplesse de l'ensemble peut également être améliorée en choisissant, pour le réseau de plots d'espacement, un pas P2 légèrement différent du pas P1 du réseau de micro-pointes, de préférence dans les deux dimensions du plan du support de mémoire, comme représenté aux figures 13 et 14. Dans ce cas, lorsqu'une micro-pointe 3 est située vis-à-vis d'un plot d'espacement 12a, les micro-pointes les plus proches sont décalées par rapport aux plots d'espacement adjacents. C'est alors la souplesse propre à la membrane 2 qui absorbe les différences de hauteur des micro-pointes 3.

Selon le procédé de fabrication d'un dispositif à lames selon les figures 13 et 14 illustré aux figures 15 à 18, le cadre 1 et les lames 13 sont formées dans une même couche 14 de silicium, de 100µm à 500µm d'épaisseur, disposée sur une couche 15, en silice, de 50nm à 500nm d'épaisseur, destinée à la formation des plots d'espacement 12a, elle-même disposée sur la membrane 2. Cette couche 15 peut également être en nitrure de silicium ou encore en carbone.

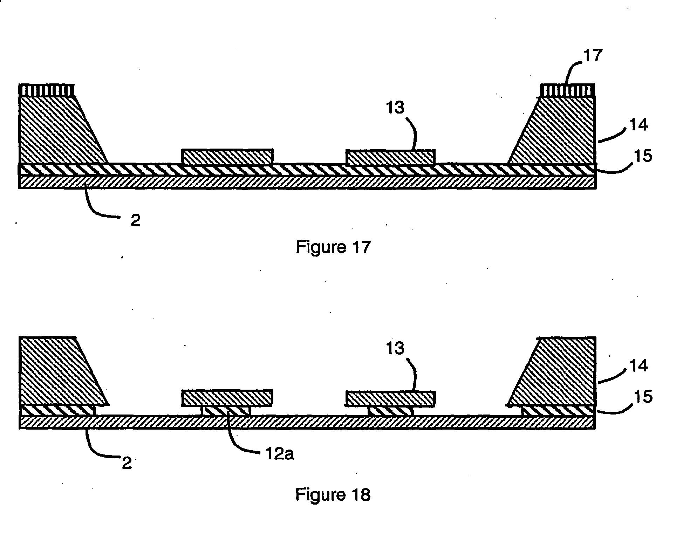

Dans une première étape, illustrée aux figures 15 et 16, la couche 14 de silicium est attaquée de manière anisotrope à travers un masque 16, protégeant l'emplacement du cadre 1 et des lames 13. Dans une seconde étape, illustrée à la figure 17, les lames 13 sont amincies par une attaque isotrope et sélective de la couche 14 de silicium, à travers un masque 17 protégeant uniquement le cadre 1. Dans une dernière étape, représentée à la figure 18, les plots d'espacement 12a sont dégagés par une attaque isotrope et sélective de la couche 15, à travers un masque (non représenté), dont les zones situées en regard des plots d'espacement ont été élargies par rapport aux zones correspondantes du masque 16 de la figure 15 utilisé au cours de la première étape. Ceci permet d'éviter un effet de surgravure, qui réduirait la formation des îlots qui constituent les plots d'espacement 12a.

Comme dans les modes de réalisation précédents, la membrane 2 peut, par exemple, être constituée par un empilement d'une couche mécaniquement rigide, par exemple en carbone-diamant amorphe (DLC) et d'une couche faisant fonction de mémoire (plastique, matériau à changement de phase, ...). Cette dernière couche peut éventuellement être déposée après la troisième étape de la figure 18, l'empilement initial de la figure 15 ne comportant alors que la couche mécaniquement rigide, par exemple de 100nm d'épaisseur, de la membrane.

L'invention n'est pas limitée aux modes de réalisation particuliers décrits ci-dessus. En particulier la membrane souple 2 peut comporter une couche en carbone-diamant, en silicium, en oxyde de silicium (SiO₂) ou même en métal. Si une conduction électrique de la membrane 2 est requise, la couche mécanique 6 de la membrane 2 peut éventuellement être dopée, par exemple par du bore ou de l'argent.

## Revendications

1. Dispositif d'enregistrement de données comportant un réseau bidimensionnel de micro-pointes (3), disposé dans un plan face à un support de mémoire, et des moyens électroniques d'adressage et de contrôle des micro-pointes de manière à permettre l'enregistrement de données sur le support de mémoire dispositif **caractérisé en ce que** le support de mémoire comprend une membrane souple (2) portée par un cadre (1) formant une pluralité d'alvéoles, au moins une micro-pointe (3) étant associée à chaque alvéole.

2. Dispositif selon la revendication 1, **caractérisé en ce que** les micropointes ont un apex de dimensions nanométriques,

3. Dispositif selon l'une des revendications 1 et 2, **caractérisé en ce que** les alvéoles sont rectangulaires.

4. Dispositif selon l'une des revendications 1 et 2, **caractérisé en ce que** les alvéoles sont hexagonales.

5. Dispositif selon l'une quelconque des revendications 1 à 4, **caractérisé en ce qu'**il comporte deux réseaux de micro-pointes (3a, 3b), disposés de part et d'autre du support de mémoire.

6. Dispositif selon la revendication 5, **caractérisé en ce que** les deux réseaux de micro-pointes sont décalés latéralement, de manière à ce que les micro-pointes (3a, 3b) associées à une même alvéole du cadre (1) ne soient pas disposées exactement en vis-à-vis.

7. Dispositif selon l'une quelconque des revendications 1 à 6, **caractérisé en ce que** le cadre (1) est constitué par une couche de silicium dans laquelle sont formées les alvéoles.

8. Dispositif selon l'une quelconque des revendications 1 à 7, **caractérisé en ce que** la membrane souple (2) comporte au moins une première couche (10), faisant fonction de mémoire, et une seconde couche (6), destinée à assurer une certaine rigidité.

9. Dispositif selon la revendication 8, **caractérisé en ce que** la seconde couche (6) est une couche en carbone amorphe ou en carbone quasi-diamant déposée sur une couche (7) de silicium avant formation des alvéoles sur la face opposée de la couche de silicium.

10. Dispositif selon la revendication 9, **caractérisé en ce que** la seconde couche (6) est dopée par du bore ou de l'argent.

11. Dispositif selon l'une quelconque des revendications 1 à 10, **caractérisé en ce que** la membrane souple comporte des première (2a) et seconde (2b) membranes élémentaires, séparées par un réseau d'éléments d'espacement (12, 12a, 12b), décalé latéralement par rapport au cadre (1).

12. Dispositif selon la revendication 11, **caractérisé en ce que** le réseau d'éléments d'espacement (12) constitue un cadre intermédiaire (12b).

13. Dispositif selon la revendication 12, **caractérisé en ce que** les éléments d'espacement sont constitués par des plots (12a).

14. Dispositif selon l'une quelconque des revendications 1 à 10, **caractérisé en ce qu'**il comporte un réseau de lames souples (13), séparées de la membrane (2) par un réseau bidimensionnel de plots d'espacement (12a) et subdivisant chaque alvéole en une pluralité d'alvéoles élémentaires, associées chacune à au moins une micro-pointe (3).

15. Dispositif selon la revendication 14, **caractérisé en ce que** le nombre de micro-pointes (3) du réseau étant de l'ordre de la dizaine de milliers, le nombre d'alvéoles élémentaires subdivisant une alvéole est de l'ordre de la centaine.

16. Dispositif selon l'une des revendications 14 et 15, **caractérisé en ce que** le réseau de micro-pointes (3) a un pas (P1) légèrement différent de celui (P2) du réseau de plots d'espacement (12a).

17. Dispositif selon l'une quelconque des revendications 14 à 16, **caractérisé en ce que** le cadre (1) et les lames (13) sont formés dans une couche (14) en silicium, de 100µm à 500µm d'épaisseur.

18. Dispositif selon l'une quelconque des revendications 11 à 17, **caractérisé en ce que** les éléments ou plots d'espacement (12, 12a, 12b) sont en silice, en nitrure de silicium ou en carbone, de 50nm à 500nm d'épaisseur.

19. Dispositif selon l'une quelconque des revendications 1 à 18, **caractérisé en ce qu'**il comporte des moyens de déplacement relatif du support de mémoire et du réseau de micro-pointes, parallèlement audit plan.

## Claims

1. Data recording device comprising a two-dimensional array of microtips (3), arranged in a plane facing a storage medium, and electronic means for addressing and controlling the microtips so as to enable data recording on the storage medium, device **characterized in that** the storage medium comprises a flexible diaphragm (2) borne by a frame (1) forming a plurality of cells, at least one micro-tip (3) being associated with each cell.

2. Device according to claim 1, **characterized in that** the microtips have an apex of nanometric dimensions.

3. Device according to one of the claims 1 and 2, **characterized in that** the cells are rectangular.

4. Device according to one of the claims 1 and 2, **characterized in that** the cells are hexagonal.

5. Device according to any one of the claims 1 to 4, **characterized in that** it comprises two arrays of microtips (3a, 3b) arranged on each side of the storage medium.

6. Device according to claim 5, **characterized in that** the two arrays of microtips are laterally offset so that the microtips (3a, 3b) associated with any one cell of the frame (1) are not arranged exactly opposite one another.

7. Device according to any one of the claims 1 to 6, **characterized in that** the frame (1) is formed by a silicon layer in which the cells are formed.

8. Device according to any one of the claims 1 to 7, **characterized in that** the flexible diaphragm (2) comprises at least a first layer (10), performing the function of a memory, and a second layer (6) designed to ensure a certain rigidity.

9. Device according to claim 8, **characterized in that** the second layer (6) is an amorphous carbon or diamond-like carbon layer deposited on a silicon layer (7) before formation of the cells is performed on the opposite face of the silicon layer.

10. Device according to claim 9, **characterized in that** the second layer (6) is doped by boron or silver.

11. Device according to any one of the claims 1 to 10, **characterized in that** the flexible diaphragm comprises first (2a) and second (2b) elementary diaphragms separated by an array of spacer elements (12, 12a, 12b) laterally offset with respect to the frame (1).

12. Device according to claim 11, **characterized in that** the array of spacer elements (12) constitutes an intermediate frame (12b).

13. Device according to claim 12, **characterized in that** the spacer elements are formed by studs (12a).

14. Device according to any one of the claims 1 to 10, **characterized in that** it comprises an array of flexible plates (13), separated from the diaphragm (2) by a two-dimensional array of spacer studs (12a) and sub-dividing each cell into a plurality of elementary cells each associated with at least one microtip (3).

15. Device according to claim 14, **characterized in that** the number of microtips (3) of the array being about ten thousand, the number of elementary cells subdividing a cell is about one hundred.

16. Device according to one of the claims 14 and 15, **characterized in that** the array of microtips (3) has a slightly different pitch (P1) from that (P2) of the array of spacer studs (12a).

17. Device according to any one of the claims 14 to 16, **characterized in that** the frame (1) and plates (13) are formed in a silicon layer (14) having a thickness of 100µm to 500µm.

18. Device according to any one of the claims 11 to 17, **characterized in that** the spacer elements or studs (12, 12a, 12b) are made of silicon dioxide, silicon nitride or carbon, with a thickness of 50nm to 500nm.

19. Device according to any one of the claims 1 to 18, **characterized in that** it comprises means for relative movement of the storage medium and of the microtip array, in a direction parallel to said plane.

## Patentansprüche

1. Vorrichtung zum Aufzeichnen von Daten, die ein zweidimensionales Netz aus Mikrospitzen (3) umfasst, das auf einer Ebene gegenüber einem Speichermedium angeordnet ist, sowie elektronische Mittel zum Adressieren und Steuern der Mikrospitzen in der Weise, dass die Aufzeichnung von Daten auf dem Speichermedium ermöglicht wird, Vorrichtung, die **dadurch gekennzeichnet ist, dass** das Speichermedium eine elastische Membran (2) umfasst, die von einem Rahmen (1) getragen wird, der eine Mehrzahl von Hohlräumen bildet, wobei jedem Hohlraum mindestens eine Mikrospitze (3) zugeordnet ist.

2. Vorrichtung nach Anspruch 1, **dadurch gekennzeichnet, dass** die Mikrospitzen eine Spitze mit nanometrischen Abmessungen haben.

3. Vorrichtung nach einem der Ansprüche 1 und 2, **dadurch gekennzeichnet, dass** die Hohlräume rechteckig sind.

4. Vorrichtung nach einem der Ansprüche 1 und 2, **dadurch gekennzeichnet, dass** die Hohlräume sechseckig sind.

5. Vorrichtung nach einem der Ansprüche 1 bis 4, **dadurch gekennzeichnet, dass** sie zwei Netze aus Mikrospitzen (3a, 3b) umfasst, die beidseits des Speichermediums angeordnet sind.

6. Vorrichtung nach Anspruch 5, **dadurch gekennzeichnet, dass** die beiden Netze aus Mikrospitzen seitlich versetzt angeordnet sind, sodass die Mikrospitzen (3a, 3b), die ein und demselben Hohlraum des Rahmens (1) zugeordnet sind, einander nicht genau gegenüberliegend angeordnet sind.

7. Vorrichtung nach einem der Ansprüche 1 bis 6, **dadurch gekennzeichnet, dass** der Rahmen (1) von einer Siliziumschicht gebildet wird, in der die Hohlräume gebildet sind.

8. Vorrichtung nach einem der Ansprüche 1 bis 7, **dadurch gekennzeichnet, dass** die elastische Membran (2) mindestens eine erste Schicht (10) umfasst, die als Speicher fungiert, sowie eine zweite Schicht (6), die zur Sicherung einer gewissen Steifheit dient.

9. Vorrichtung nach Anspruch 8, **dadurch gekennzeichnet, dass** die zweite Schicht (6) eine Schicht aus amorphem Kohlenstoff oder diamantartigem Kohlenstoff ist, die auf eine Siliziumschicht (7) aufgebracht wird, und zwar vor Bildung der Hohlräume auf der entgegengesetzten Seite der Siliziumschicht.

10. Vorrichtung nach Anspruch 9, **dadurch gekennzeichnet, dass** die zweite Schicht (6) bor- oder silberdotiert ist.

11. Vorrichtung nach einem der Ansprüche 1 bis 10, **dadurch gekennzeichnet, dass** die elastische Membran eine erste (2a) und eine zweite (2b) elementare Membran umfasst, die durch ein Netz aus Abstandselementen (12, 12a, 12b) voneinander getrennt sind, das bezüglich dem Rahmen (1) seitlich versetzt ist.

12. Vorrichtung nach Anspruch 11, **dadurch gekennzeichnet, dass** das Netz aus Abstandselementen (12) einen Zwischenrahmen (12b) bildet.

13. Vorrichtung nach Anspruch 12, **dadurch gekennzeichnet, dass** die Abstandselemente von Stiften (12a) gebildet werden.

14. Vorrichtung nach einem der Ansprüche 1 bis 10, **dadurch gekennzeichnet, dass** sie ein Netz aus elastischen Plättchen (13) umfasst, die von der Membran (2) durch ein zweidimensionales Netz aus Abstandsstiften (12a) getrennt sind und jede Zelle in eine Mehrzahl elementarer Hohlräume unterteilen, die jeweils mindestens einer Mikrospitze (3) zugeordnet sind.

15. Vorrichtung nach Anspruch 14, **dadurch gekennzeichnet, dass** die Anzahl Mikrospitzen (3) des Netzes etwa zehntausend beträgt und die Anzahl elementarer Hohlräume, die eine Zelle unterteilen, etwa einhundert beträgt.

16. Vorrichtung nach einem der Ansprüche 14 und 15, **dadurch gekennzeichnet, dass** das Netz aus Mikrospitzen (3) eine Teilung (P1) aufweist, die sich geringfügig von derjenigen (P2) des Netzes aus Abstandsstiften (12a) unterscheidet.

17. Vorrichtung nach einem der Ansprüche 14 bis 16, **dadurch gekennzeichnet, dass** der Rahmen (1) und die Plättchen (13) in einer Siliziumschicht (14) gebildet sind, die eine Dicke von 100 bis 500 µm aufweist.

18. Vorrichtung nach einem der Ansprüche 11 bis 17, **dadurch gekennzeichnet, dass** die Abstandselemente oder -stifte (12, 12a, 12b) aus Siliziumdioxid, Siliziumnitrid oder Kohlenstoff bestehen, mit einer Dicke von 50 bis 500 nm.

19. Vorrichtung nach einem der Ansprüche 1 bis 18, **dadurch gekennzeichnet, dass** sie Mittel zur relativen Versetzung des Speichermediums und des Netzes aus Mikrospitzen parallel zur genannten Ebene aufweist.
